# EUROPÄISCHE PATENTANMELDUNG

(11) **EP 2 653 693 A1**
(43) Veröffentlichungstag der Anmeldung: **23.10.2013**
(21) Anmeldenummer: 13158506.9
(22) Anmeldetag: 11.03.2013
(51) Int. Cl.: F02B 47/02, F02M 25/03

(54) **Brennkraftmaschine**

(30) Priorität: 17.04.2012 DE 102012206242
(71) Anmelder: Bayerische Motoren Werke Aktiengesellschaft, 80809 München (DE)
(72) Erfinder: Böhm, Martin, 82343 Pöcking (DE); Rubbert, Stephan, 85757 Karlsfeld (DE); Schünemann, Erik, 80809 München (DE)

(57) **Zusammenfassung**

Brennkraftmaschine mit einer Kraftstoffeinbringung direkt in einen Brennraum, der von einem in einem Zylinder beweglich angeordneten Kolben, dem Zylinder und einem Zylinderkopf oder einer Trochoide begrenzt ist, in dem Gaswechselelemente für einen Gaswechsel und ein Kraftstoffinjektor zur Einbringung eines Kraftstoffes angeordnet sind, wobei ein Wasserinjektor vorgesehen ist, zur Einbringung von Wasser direkt in den Brennraum, wobei der Wasserinjektor derart angeordnet ist, dass in einem Brennraumbereich, in dem eine klopfende Verbrennung stattfinden kann, eine Brennraumoberfläche mit Wasser anspritzbar ist.

Durch die erfindungsgemäße Ausgestaltung wird ein Brennraumbereich ge- " zielt gekühlt, um eine klopfende Verbrennung sicher zu verhindern.

## Beschreibung

Die Erfindung betrifft eine Brennkraftmaschine mit den Merkmalen aus dem Oberbegriff des Patentanspruchs 1.

Die Wassereinspritzung ist ein bekanntes Verfahren zur Leistungssteigerung oder Schadstoffreduzierung, insbesondere der NOₓ Rohemissionen, von , Brennkraftmaschinen. Dabei wird meist in das Ansaugsystem einer üblicherweise aufgeladenen Brennkraftmaschine Wasser oder ein Wasser-AlkoholGemisch eingespritzt. Die verdampfende Flüssigkeit hat eine kühlende Wirkung auf die angesaugte Verbrennungsluft und vermindert somit die Verdichtungsarbeit. Die Wassereinspritzung dient jedoch nur der Leistungssteigerung, nicht der Wirkungsgradsteigerung. Weiter wird die Wassereinspritzung bei Otto-Brennkraftmaschinen eingesetzt, um eine klopfende Verbrennung zu unterdrücken und damit wiederum die Leistung zu steigern.

Die Wasserzufuhr in das Ansaugsystem ist jedoch weniger wirksam als die direkte Einspritzung in den Brennraum, da ein Teil des Kühleffekts durch die Erwärmung im Einlasskanal und am Einlassventil verloren geht. Damit ist ein höherer Wasseranteil erforderlich. Die Mischung mit dem Kraftstoff ist insbesondere im Instationärbetrieb ungünstig, da das zugeführte Wasser erst mit Verzögerung in den Brennraum gelangt und nach der Abschaltung der Wasserzugabe zum Kraftstoff noch längere Zeit wirksam ist. Vor dem Abstellen der Brennkraftmaschine muss weiter bei niedrigen Umgebungstemperaturen das Kraftstoff-Einspritzsystem vollständig mit reinem Kraftstoff gespült werden, da ansonsten das Einspritzsystem einfrieren kann.

Aus der deutschen Offenlegungsschrift DE 102 04 182 A1, von der die vorliegende Erfindung ausgeht, ist eine Brennkraftmaschine mit mindestens einem einen Kolben aufnehmenden Zylinder bekannt. Dieser Zylinder ist mit mindestens einem Gaswechsel-Einlassventil versehen und mit einer Einrichtung zur Zufuhr von Wasser zur NOₓ-Reduzierung. Um bei geringem Bauaufwand eine genau dosierbare Wassermenge der Verbrennung zusetzen zu können, ist im Bereich des oder der Gaswechsel-Einlassventile wenigstens ein zu Beginn des Ansaughubs öffnendes Wasser-Einspritzventil zur Wasserzufuhr vorgesehen.

Weiter ist aus der deutschen Offenlegungsschrift DE 10 2007 050 511 A1 ein Verfahren zum Betreiben einer Brennkraftmaschine bekannt. Das Verfahren zum Betreiben einer Brennkraftmaschine, insbesondere einer Otto-Brennkraftmaschine, zeichnet sich dadurch aus, dass in wenigstens einem bestimmten Betriebszustand der Brennkraftmaschine dem Luft-KraftstoffGemisch Wasser zugegeben wird. Hierbei wird die Wassereinspritzung hinsichtlich Wassermenge, zeitlicher Dauer und Lage von Beginn und Ende der Wassereinspritzung, bezogen auf einen Kurbelwinkel derart durchgeführt, dass bei einem Lambda-Wert >1 NOₓ-Emissionen unterhalb eines vorbestimmten Wertes liegen und/oder eine Klopfneigung der Brennkraftmaschine bei Kraftstoff mit geringer Oktanzahl verringert wird.

Weiter ist aus der deutschen Offenlegungsschrift DE 39 28 611 A1 eine Einspritzdüse für Diesel-Brennkraftmaschinen bekannt, mit der es möglich ist, Kraftstoff und Wasser parallel direkt in den Brennraum einzuspritzen.

Nachteilig an dieser Kombinationsdüse ist, dass der Kraftstoff und die Zusatzflüssigkeit gleichzeitig eingespritzt werden.

Aufgabe der vorliegenden Erfindung ist es, eine weitere konkrete Maßnahme aufzuzeigen, um eine klopfende Verbrennung zu unterdrücken.

Diese Aufgabe wird durch das Merkmal im kennzeichnenden Teil des Patentanspruchs 1 gelöst.
Die Wasserzufuhr mit einem separaten Wasserinjektor in den Brennraum ermöglicht die Wassereinspritzung in vorteilhafter Weise ohne zeitliche Verzögerung und ohne Einschränkung des nutzbaren zeitlichen Einspritzfensters innerhalb des Arbeitszyklus. In gleicher Weise kann die Wasserzufuhr innerhalb eines Zyklus wieder abgeschaltet werden. Das Einspritzfenster kann für eine möglichst hohe Wirksamkeit der Wassereinspritzung optimiert werden. Damit wird der Wasserverbrauch im Vergleich zu einem konventionellen System deutlich verringert. Bei einem Einfrieren des Wassereinspritzsystems ist die Brennkraftmaschine weiterhin betriebsbereit. Vor dem Abstellen der Brennkraftmaschine muss das Kraftstoffsystem nicht gespült werden sondern nur im Systemdruck entlastet werden. Mit der erfindungsgemäßen Brennkraftmaschine wird partiell ein Brennraumbereich abgekühlt, wodurch eine klopfende Verbrennung wirksam vermieden ist.

Vorteilhafte Weiterbildungen der Erfindung sind in den Unteransprüchen beschrieben.

So kann die Brennkraftmaschine gemäß Patentanspruch 2 sowohl eine 2-Takt- als auch eine 4-Takt- als auch eine Kreiskolbenbrennkraftmaschine sein.

In vorteilhafter Weise kann die Brennkraftmaschine gemäß Patentanspruch 3 mit flüssigem und/oder gasförmigem Brennstoff betreibbar sein. Hierbei kann es sich beispielsweise um komprimiertes Erdgas oder Wasserstoff und/oder Benzin- oder Dieselkraftstoff handeln.

Damit sich die erfindungsgemäße Wirkung bestmöglich einstellen kann ist gemäß Patentanspruch 4 eine brennraumbegrenzende Oberfläche, wie z. B. eine Zylinder- und/oder eine Zylinderkopf- und/oder Kolbenoberfläche mit Wasser anspritzbar. Durch eine spezielle Ausbildung des Wassersprays lässt sich auch die Kraftstoffinjektorspitze anspritzen und damit kühlen bzw. reinigen, um z. B. Ablagerungen zu verhindern. Ferner können thermisch belastete Bauteile gekühlt werden.

Um dies zu erreichen wird gemäß Patentanspruch 5 ein variabler Einspritzdruck für das Wasser, beispielsweise zwischen 5 bar und 200 bar vorgeschlagen, so dass das Wasser zuverlässig auf die zu kühlende Oberfläche auftrifft.

Gemäß zwei bevorzugten Ausführungsbeispielen kann der Wasserinjektor gemäß Patentanspruch 6 in dem Zylinder oder in dem Zylinderkopf angeordnet sein.

Besonders bevorzugt wird für den Wasserinjektor gemäß Patentanspruch 7 ein vollständig unabhängiges Wasser-Einspritzsystem vorgesehen. Dies gewährleistet die maximale Flexibilität der Wassereinspritzung und verhindert ein Einfrieren des Kraftstoffsystems bei Temperaturen unter dem Gefrierpunkt.

Eine Wassereinspritzung mit dem Wasserinjektor findet gemäß Patentanspruch 8 bevorzugt in einem zeitlich variablen Einspritzintervall statt.

Die Wassereinspritzung kann zur weiteren Steigerung des Wirkungsgrades der Brennkraftmaschine in vorteilhafter Weise mit einem hohen Verdichtungsverhältnis kombiniert werden.

Im Folgenden ist die Erfindung anhand eines Ausführungsbeispieles in zwei schematischen Figuren näher erläutert.
- Fig. 1: zeigt einen Längsschnitt durch eine erfindungsgemäße Brennkraftmaschine.
- Fig. 2: zeigt eine Aufsicht auf die Brennkraftmaschine.

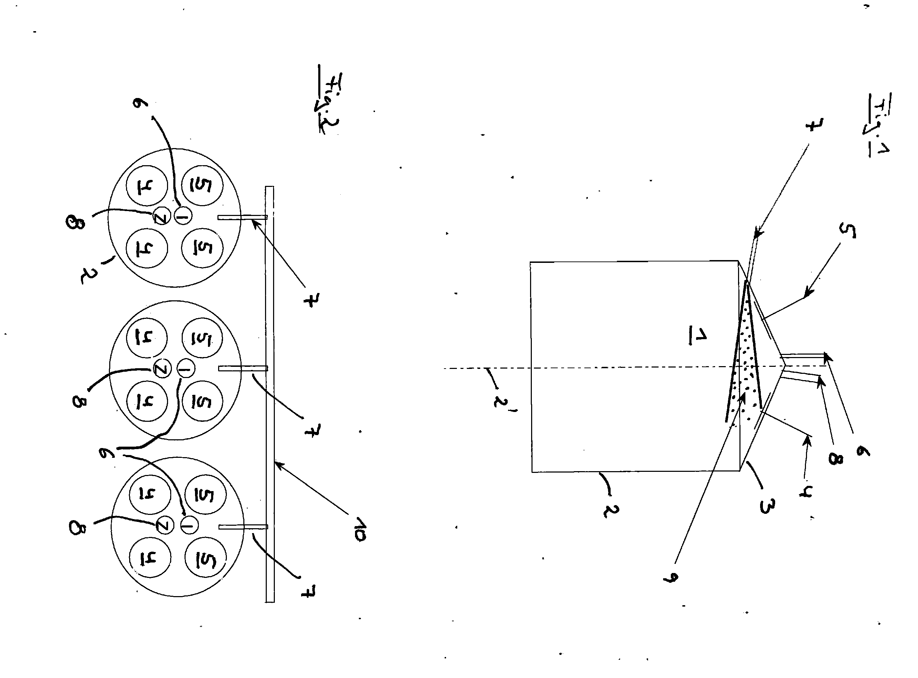

Fig. 1 zeigt schematisch einen Schnitt durch eine erfindungsgemäße Brennkraftmaschine, im vorliegenden Ausführungsbeispiel eine Hubkolben-Brennkraftmaschine, entlang einer Zylinderlängsachse 2' eines Zylinders 2. Die erfindungsgemäße Brennkraftmaschine weist eine Kraftstoffeinbringung direkt in einen Brennraum 1 auf, ist somit in diesem Ausführungsbeispiel eine sog. direkt einspritzende Brennkraftmaschine. Der Brennraum 1 wird hierbei von einem in einem Zylinder 2 hubbeweglich angeordneten, nicht dargestellten Kolben, dem Zylinder 2 und einem Zylinderkopf 3 begrenzt. In dem Zylinderkopf 3 sind in diesem Ausführungsbeispiel zwei Gaswechseleinlasselemente 4 und zwei Gaswechselauslasselemente 5 für einen Gaswechsel sowie ein Kraftstoffinjektor 6 zur Einbringung des Kraftstoffes angeordnet. Weiter ist ein Wasserinjektor 7 vorgesehen, zur Einbringung von Wasser direkt in den Brennraum 1 der Brennkraftmaschine. Eine ebenfalls im Zylinderkopf 3 angeordnete Zündeinrichtung ist mit 8 beziffert. Ein gepunktet dargestellter Wasserspraykegel ist mit 9 beziffert.

Erfindungsgemäß ist der Wasserinjektor 7 derart angeordnet, dass mit ihm in einem Brennraumbereich, in dem eine klopfende Verbrennung stattfinden kann, eine Brennraumoberfläche mit Wasser anspritzbar ist. Durch diese erfindungsgemäße Maßnahme und Ausgestaltung wird die Brennraumoberfläche beim Betrieb der Brennkraftmaschine soweit herunter gekühlt, dass eine klopfende Verbrennung sicher vermieden ist. Zusätzlich können mit dieser Maßnahme NOₓ-Rohemissionen reduziert, sowie eine Anfettung (λ<1) bei höheren Lasten vermieden werden, was ein höheres Verdichtungsverhältnis erlaubt und dadurch eine deutliche Kraftstoffersparnis erzielt wird.

Die Brennkraftmaschine kann als eine 2-Takt-Brennkraftmaschine oder auch als eine 4-Takt-Brennkraftmaschine oder auch als eine Kreiskolbenbrennkraftmaschine ausgeführt sein. In diesem Fall dreht sich der Kolben in einer Trochoide, die den Zylinder und den Zylinderkopf darstellt. Der erfindungsgemäße Effekt ist für alle Ausführungsbeispiele identisch.

In vorteilhafter Weise kann die Brennkraftmaschine mit flüssigem und/oder gasförmigem Brennstoff betrieben werden. Hierbei kann es sich um Benzin oder Diesel oder Erdgas oder auch Wasserstoff handeln.

Bevorzugt ist mit der erfindungsgemäßen Ausgestaltung eine Zylinder-und/oder eine Zylinderkopfoberfläche und/oder Kolbenoberfläche mit Wasser anspritzbar. Durch eine spezielle Ausbildung des Wasserspraykegels 9 lässt sich auch die Kraftstoffinjektorspitze anspritzen und damit kühlen bzw. reinigen, um z. B. Ablagerungen zu verhindern. Ferner können thermisch belastete Bauteile gekühlt werden. Welcher Bereich des Brennraums für die Entstehung einer klopfenden Verbrennung besonders anfällig ist, muss für jede Brennkraftmaschine separat ermittelt werden, meist handelt es sich jedoch um die Auslassseite der Brennkraftmaschine.

Damit das Wasser die dem Wasserinjektor 7 gegenüberliegende Brennraumoberfläche benetzen kann, ist der Einspritzdruck für das Wasser variabel und beträgt bevorzugt zwischen 5 bar und 200 bar. Bei geeigneten Einspritzdrücken können die Wassertröpfchen in den Brennraum eindringen und diesen vollständig durchdringen, bevor sie an der Zylinderoberfläche und/oder an der Zylinderkopfoberfläche und/oder Kolbenoberfläche aufprallen.

Aus Packagegründen ist der Wasserinjektor 7 bevorzugt in der Zylinderwandung 2 oder in dem Zylinderkopf 3 angeordnet.

In einer besonders bevorzugten Ausführungsform ist für den Wasserinjektor 7 ein vollständig eigenes Wasser-Einspritzsystem vorgesehen.

Fig. 2 zeigt schematisch eine Aufsicht auf eine erfindungsgemäß ausgestaltete Brennkraftmaschine. Dargestellt sind schematisch drei in Reihe angeordnete, nebeneinander liegende Zylinder 2, mit jeweils zwei Gaswechselauslasselementen 4 und zwei Gaswechseleinlasselementen 5. In anderen Ausführungsbeispielen können auch mehr oder weniger Gaswechselelemente vorgesehen sein. Zentrisch zwischen den Gaswechselelementen 4, 5 sind je Zylinder 2 ein Kraftstoffinjektor 6 sowie eine Zündeinrichtung 8 angeordnet. Einlassseitig ist für jeden Zylinder 2 ein Wasserinjektor 7 vorgesehen. Als Bestandteil des unabhängigen Wasser-Einspritzsystems ist für den Wasserinjektor 7 ein Wasserrail 10 vorgesehen, welches alle Wasserinjektoren 7 mit Wasser versorgt.

In weiteren Ausführungsbeispielen kann der Wasserinjektor 7 auch zwischen den Gaswechseleinlass- und Gaswechselauslasselementen 4, 5 oder auslassseitig angeordnet sein.

Um die eingangs erwähnten Nachteile im Stand der Technik zu umgehen, wird das Wasser durch einen separaten Wasserinjektor 7 unabhängig vom Kraftstoff direkt in den Brennraum 1 eingespritzt. Dazu ist ein zweites, unabhängiges Wasser-Einspritzsystem mit dem Wasserrail 10 und einer separaten Wasser-Hochdruckpumpe erforderlich.

Die Wasserzufuhr mit einem eigenen Wasserinjektor 7 in den Brennraum 1 ermöglicht die Wassereinspritzung ohne zeitliche Verzögerung und ohne Einschränkung des zeitlich nutzbaren Einspritzfensters innerhalb eines Arbeitszyklus. In gleicher Weise kann die Wasserzufuhr innerhalb eines Zyklus wieder abgeschaltet werden. Das Einspritzfenster kann für eine möglichst hohe Wirksamkeit der Wassereinspritzung optimiert werden. Damit wird der Wasserverbrauch im Vergleich zu einem konventionellen System, beispielsweise mit Saugrohrwassereinspritzung, deutlich verringert. Bei einem Einfrieren des Wassereinspritzsystems ist die Brennkraftmaschine weiterhin betriebsbereit. Vor dem Abstellen der Brennkraftmaschine muss das Kraftstoffsystem nicht gespült werden, sondern nur im Systemdruck entlastet werden.

### Bezugszeichenliste:

| | |
|---|---|
| 1. | Brennraum |
| 2. | Zylinder |
| 2' | Zylinderlängsachse |
| 3. | Zylinderkopf |
| 4. | Gaswechselauslasselement |
| 5. | Gaswechseleinlasselement |
| 6. | Kraftstoffinjektor |
| 7. | Wasserinjektor |
| 8. | Zündeinrichtung |
| 9. | Wasserspraykegel |
| 10. | Wasserrail |

## Patentansprüche

1. Brennkraftmaschine mit einer Kraftstoffeinbringung direkt in einen Brennraum (1), der von einem in einem Zylinder (2) beweglich angeordneten Kolben, dem Zylinder (2) und einem Zylinderkopf (3) oder einer Trochoide begrenzt ist, in dem Gaswechselelemente (4, 5) für einen Gaswechsel und ein Kraftstoffinjektor (6) zur Einbringung eines Kraftstoffes angeordnet sind, wobei ein Wasserinjektor (7) vorgesehen ist, zur Einbringung von Wasser direkt in den Brennraum (1), **dadurch gekennzeichnet, dass** der Wasserinjektor (7) derart angeordnet ist, dass in einem Brennraumbereich, in dem eine klopfende Verbrennung stattfinden kann, eine Brennraumoberfläche mit Wasser anspritzbar ist.

2. Brennkraftmaschine nach Patentanspruch 1,
**dadurch gekennzeichnet, dass** die Brennkraftmaschine eine Zweitakt-Brennkraftmaschine oder eine Viertakt-Brennkraftmaschine oder eine Kreiskolbenbrennkraftmaschine ist.

3. Brennkraftmaschine nach Patentanspruch 1 oder 2,
**dadurch gekennzeichnet, dass** die Brennkraftmaschine mit flüssigem und/oder gasförmigen Brennstoff betreibbar ist.

4. Brennkraftmaschine nach einem der Patentansprüche 1 bis 3,
**dadurch gekennzeichnet, dass** eine Zylinder- und/oder eine Zylinderkopfoberfläche und/oder der Kraftstoffinjektor (6) und/oder eine Kolbenoberfläche mit Wasser anspritzbar ist.

5. Brennkraftmaschine nach einem der Patentansprüche 1 bis 4,
**dadurch gekennzeichnet, dass** ein Einspritzdruck für das Wasser variabel ist.

6. Brennkraftmaschine nach einem der Patentansprüche 1 bis 5, .
**dadurch gekennzeichnet, dass** der Wasserinjektor (7) in dem Zylinder (2) oder in dem Zylinderkopf (3) angeordnet ist.

7. Brennkraftmaschine nach einem der Patentansprüche 1 bis 6,
**dadurch gekennzeichnet, dass** für den Wasserinjektor (7) ein unabhängiges Einspritzsystem vorgesehen ist.

8. Brennkraftmaschine nach einem der Patentansprüche 1 bis 7,
**dadurch gekennzeichnet, dass** eine Wassereinspritzung mit dem Wasserinjektor (7) in einem zeitlich variablen Einspritzintervall durchführbar ist.
